# FASCICULE DE BREVET EUROPEEN

(11) **EP 4 127 441 B1**
(45) Date de publication et mention de la délivrance du brevet: **24.04.2024**
(21) Numéro de dépôt: 21720822.2
(22) Date de dépôt: 31.03.2021
(51) Int. Cl.: F02K 1/72, F02K 1/76

(54) **INVERSEUR DE POUSSEE POUR TURBOREACTEUR**
SCHUBUMKEHRVORRICHTUNG FÜR EIN TURBOSTRAHLTRIEBWERK
THRUST REVERSER FOR TURBOJET ENGINE

(30) Priorité: 02.04.2020 FR 2003315
(43) Date de publication de la demande: 08.02.2023
(73) Titulaire: Safran Nacelles, 76700 Gonfreville-l'Orcher (FR)
(72) Inventeur: CARUEL, Pierre, Charles, 77550 MOISSY-CRAMAYEL (FR)
(74) Mandataire: Cabinet Beau de Loménie
(86) Numéro de dépôt international: PCT/FR2021/050568
(87) Numéro de publication internationale: WO 2021/198617

(56) Documents cités:
- WO-A1-2016/116709
- WO-A1-2018/100288
- FR-A1- 2 913 664
- FR-A1- 3 038 587

## Description

### Domaine Technique

Le présent exposé concerne un inverseur de poussée pour turboréacteur, et plus particulièrement un système de reprise d'effort sur mât réacteur.

Un tel inverseur de poussée peut être utilisé pour tout type de turboréacteur, en particulier pour des turboréacteurs d'aviation civile.

WO 2018/100288 A1 concerne une nacelle de turboréacteur d'aéronef, un ensemble propulsif et un aéronef comportant une telle nacelle.

### Technique antérieure

Les inverseurs de poussée sont des éléments d'un turboréacteur permettant d'orienter vers l'avant une partie du flux d'air traversant le turboréacteur, afin d'inverser la poussée exercée par le turboréacteur et ralentir l'aéronef sur lequel le turboréacteur est monté en cas d'atterrissage ou de freinage d'urgence, par exemple lors d'un abandon de décollage.

En particulier, parmi les inverseurs de poussée connus figurent les inverseurs de poussée à grilles. Ces derniers comprennent des grilles s'étendant sur une circonférence du turboréacteur et présentant des profils aérodynamiques dirigés vers l'avant, ainsi que des vérins entraînant les grilles et un capot mobile. En temps normal, c'est-à-dire lorsque le turboréacteur génère une poussée, en phase de vol par exemple, le capot mobile est dans un état fermé dans lequel il recouvre les grilles empêchant ainsi l'air de s'échapper du turboréacteur par ces dernières ; en revanche, lorsque l'inverseur est déployé afin de générer une contre poussée, le capot mobile coulisse le long du turboréacteur, et est alors dans un état déployé dans lequel il découvre les grilles, permettant ainsi au flux d'air de les traverser et d'être redirigé vers l'avant.

Dans certains ensembles inverseur de poussée de ce type, le capot mobile est entraîné le long du mât par deux vérins. Une telle structure requiert une grande précision d'assemblage afin d'obtenir un montage serré entre la partie fixe et la partie mobile de l'inverseur de poussée et ainsi assurer l'étanchéité entre ces dernières tout en contraignant le moins possible la structure fixe. Un tel montage serré conduit à la transmission par l'inverseur de nombreux efforts parasites du moteur au mât ou à la nacelle. De plus, la commande des deux vérins doit être synchronisée afin de ne pas introduire d'efforts supplémentaires.

Il est alors avantageux de réaliser un inverseur de poussée pour turboréacteur ne comprenant qu'un unique vérin. En effet, une telle configuration présente un assemblage facilité, et simplifie la commande du vérin.

Toutefois, l'utilisation d'un unique vérin déséquilibre la structure de l'inverseur. En effet, l'ouverture de l'inverseur de poussée lors de son activation entraîne un effort vers l'arrière de l'inverseur, ce qui se traduit par un moment important et une forte flexion au niveau de la poutre comprenant l'unique vérin, en particulier en cas d'urgence où les efforts sont plus importants. Cette forte flexion entraîne alors des difficultés pour assurer le coulissement de la partie mobile par rapport à la partie fixe; de plus elle requiert un surdimensionnement de la poutre afin de permettre sa tenue.

Il existe donc un réel besoin pour un inverseur de poussée ne comprenant qu'un unique vérin et permettant de répondre au moins partiellement à ces problématiques.

### Exposé de l'invention

Le présent exposé concerne un inverseur de poussée pour turboréacteur, ledit turboréacteur étant monté sur un mât réacteur et possédant un axe principal, comprenant
une partie fixe, prévue pour être montée sur le turboréacteur de manière à encercler ce dernier,
une partie mobile, coaxiale et montée en translation par rapport à la partie fixe entre un état fermé et un état déployé, la partie mobile étant rapportée de manière étanche contre la partie fixe en bloquant un passage de sortie d'air dans l'état fermé alors que le passage de sortie d'air est libéré dans l'état déployé, et
un unique dispositif d'actionnement comportant
   - une poutre, solidaire de la partie fixe, s'étendant axialement le long de la surface externe de la partie fixe,
   - une glissière, solidaire de la partie mobile, montée en translation sur la poutre, et
   - un dispositif d'entraînement, configuré pour entraîner la partie mobile en translation par rapport à la partie fixe,
dans lequel la poutre ou la glissière comprend une butée prenant la forme d'une excroissance faisant saillie sur une surface radialement externe de ladite poutre ou glissière et configurée pour présenter un jeu dans l'état fermé par rapport audit mât réacteur.

Un tel inverseur de poussée présente l'avantage de sécuriser la commutation de l'inverseur de poussée entre l'état fermé et l'état déployé permettant la redirection du flux d'air vers l'avant, en assurant le coulissement de la partie mobile par rapport à la partie fixe. En particulier, un tel inverseur de poussée présente une flexion réduite lors du fonctionnement de l'inverseur de poussée, cette flexion étant limitée par la butée qui vient prendre appui sur le mât réacteur, permettant ainsi au dispositif d'entraînement de fonctionner correctement, y compris en cas d'urgence. La translation de la partie mobile par rapport à la partie fixe est réalisée selon l'axe principal de la turbomachine. Cet inverseur de poussée présente ainsi un couplage ou un découplage selon la situation : la butée permet par exemple un couplage entre la partie mobile de l'inverseur et le mat réacteur dans l'état déployé lorsque les efforts sont importants et que la transmission de ces efforts est souhaitée, par exemple, lors d'un freinage d'urgence ; en revanche, la partie mobile de l'inverseur et le mât réacteur peuvent être découplés, c'est-à-dire sans contact, dans l'état fermé, en vol ou en phase de décollage par exemple, et éventuellement dans l'état déployé lorsque les efforts subis par la partie mobile sont plus faible et que cette transmission d'effort n'est pas souhaitée, par exemple lors d'un freinage normal ; on évite alors une transmission d'efforts parasites.

Dans le présent exposé, les termes « axial », « radial », « tangentiel », « intérieur », « extérieur » et leurs dérivés sont définis par rapport à l'axe principal de la turbomachine ; on entend par « plan axial » un plan passant par l'axe principal de la turbomachine et par « plan radial » un plan perpendiculaire à cet axe principal ; enfin, les termes « amont », « aval », « avant » et « arrière » sont définis par rapport à la direction principale de circulation de l'air dans la turbomachine.

Dans certains modes de réalisation, l'inverseur comprend un unique dispositif d'entraînement.

Dans certains modes de réalisation, le dispositif d'entraînement est monté entre la poutre et la glissière.

Dans certains modes de réalisation, au moins une butée est portée par la poutre. De cette manière, la position axiale de la butée reste inchangée.

Dans certains modes de réalisation, la butée est située à une distance de l'extrémité avant de la poutre comprise entre 2,3 et 3,1 fois la longueur de la course du déplacement de la partie mobile entre la position fermée et la position déployée, de préférence comprise entre 2,5 et 2,8 fois la longueur de la course du déplacement de la partie mobile.

Une telle position de la butée permet, en contrôlant la distance de la butée à la liaison entre la partie fixe et la partie mobile, de bloquer une partie de la poutre d'autant plus grande que la butée est distante de la liaison entre la partie fixe et la partie mobile.

Dans certains modes de réalisation, la butée est configurée pour toucher le mât réacteur à partir d'un niveau de flexion donné de la poutre correspondant à une déformation de la poutre sous l'effet d'un fonctionnement d'urgence de l'inverseur de poussée.

Autrement dit, la butée ne touche pas le mât réacteur pour un niveau de flexion de la poutre correspondant à un fonctionnement normal de l'inverseur de poussée, soit par exemple une déformation de l'ordre de 15 mm à 18 mm pour un moteur muni d'une soufflante de 1,1 m de diamètre, tandis que la butée touche le mât réacteur pour un fonctionnement d'urgence de l'inverseur de poussée, par exemple lorsque la déformation atteint 18 mm.

Par fonctionnement normal est compris le fonctionnement de l'inverseur de poussée entièrement déployé afin de ralentir un aéronef lors d'un atterrissage en conditions normales, l'inverseur de poussée étant complètement déployé alors que la turbomachine fonctionne à un régime proche de son régime de ralenti. Un tel jeu permet de s'assurer qu'hors fonctionnement de l'inverseur de poussée, des déformations de faible amplitude, par exemple dues à des vibrations ou aux efforts aérodynamiques appliqués à l'extérieur de la nacelle, n'entraînent pas de contact entre la butée et le mât, limitant les transmissions non souhaitées d'effort parasites.

Par fonctionnement d'urgence, ou fonctionnement critique, est compris le fonctionnement de l'inverseur de poussée entièrement déployé en cas d'atterrissage d'urgence, ou d'interruption du décollage, lorsque l'inverseur est activé tandis que la vitesse avion est supérieure à la vitesse normale ou le turboréacteur fonctionne à un régime proche de la pleine puissance

Dans certains modes de réalisation, la poutre ou la glissière présente une deuxième butée positionnée dans un même plan radial que la première butée et configurée pour présenter un jeu par rapport au mât réacteur sensiblement égal au jeu de la première butée.

En positionnant la deuxième butée dans le même plan radial que la première butée, la deuxième butée peut supplémenter la reprise d'effort de la deuxième butée pour une même flexion, afin de former un deuxième chemin d'effort et ainsi de partager l'effort entre les deux butées. En particulier, une telle disposition permet de reprendre les efforts dus à la flexion de la poutre dans le plan contenant l'axe principal et la poutre, en direction de la poutre, et permet en plus de reprendre un éventuel moment de torsion selon l'axe principal, en principe plus faible.

Dans certains modes de réalisation, l'une au moins des butées comprend un élément de contact.

Par élément de contact, est compris une pièce ayant une structure permettant une large répartition du contact de la butée sur la surface antagoniste du mât, et conçue dans un matériau souple, par exemple en élastomère ou en d'autres matériaux polymères comme le nylon, l'ertacetal ou le teflon, afin d'amortir les vibrations pouvant être transmises, ou limiter les effets de martelage contre le mât.

Dans certains modes de réalisation, au moins une butée comporte un dispositif de réglage de la profondeur.

Ce dispositif permet d'ajuster la profondeur de la butée sans procéder à un désassemblage et réassemblage de la butée, ni à un changement des pièces. Cela permet d'ajuster le jeu, par exemple pour compenser une usure de la butée, et pour compenser les tolérances géométriques des différents composants.

Dans certains modes de réalisation, au moins une butée comprend une console et un élément de contact prévu pour être remplacé.

Dans une telle structure, la console est l'élément de liaison de la butée à la poutre. L'élément de contact est réalisé en élastomère ou en d'autres matériaux polymères comme le nylon, l'ertacetal ou le teflon, ou tout autre matériau présentant des propriétés d'élasticité permettant de limiter les vibrations et le martelage de la butée.

Dans certains modes de réalisation, l'élément de contact est amovible et destiné à être remplacé en cas d'usure.

L'élément de contact joue ainsi le rôle de pièce d'usure, afin d'être usé préférentiellement au mât réacteur. Une autre structure de la butée peut être utilisée, par exemple dans laquelle la console et l'élément de contact sont une seule et même pièce, ou tout autre structure ou combinaison de matériaux permettant d'assurer les fonctions d'élément d'usure et d'amortissement des vibrations.

Dans certains modes de réalisation, le mât réacteur présente une surface d'appui antagoniste à la butée.

La surface d'appui permet de recevoir l'appui de la butée lorsque la flexion de la poutre entraîne un déplacement supérieur au jeu prévu entre la butée et le mât, et ainsi de reprendre les efforts dus au fonctionnement de l'inverseur de poussée.

Dans le présent exposé, par partie fixe, on entend l'ensemble des pièces de l'inverseur de poussée fixes dans le référentiel du moteur. En particulier, la partie fixe comprend une bride de fixation de l'inverseur de poussée sur un carter fixe entourant une veine du moteur, un capot fixe entourant le carter fixe et les grilles, et la poutre sur laquelle est fixé le dispositif d'entraînement.

On comprendra que la dénomination de partie fixe est illustrative, et que l'appellation fixe n'exclut pas l'existence de déformations internes ou de mobilités en rotation, tandis que les éléments de liaison entre les parties fixe et mobile seront considérés comme faisant partie de l'une ou l'autre des parties fixe et mobile selon l'extrémité considérée.

Par partie mobile, on entend les pièces de l'inverseur de poussée mobiles en translation par rapport à la partie fixe. En particulier, la partie mobile comprend la glissière, un capot mobile rapporté de manière étanche contre la partie fixe dans l'état fermé, au moins une grille d'inverseur s'étendant sur un contour circonférentiel du capot fixe et au moins un panneau de blocage permettant d'obstruer la sortie directe du moteur afin de dévier le flux d'air à travers les grilles.

On comprendra que les structures des parties mobile et fixe sont illustratives et ne sont pas limitées aux modes de réalisation du présent exposé. En particulier, les grilles peuvent être des éléments de la partie fixe

Le dispositif d'entraînement peut être réalisé par un unique vérin,

L'élément de contact peut prendre la forme d'un tampon de contact.

L'inverseur de poussée peut comprendre au moins un verrou pour maintenir ensemble les parties fixe et mobile, et en particulier deux verrous.

Le présent exposé concerne également un ensemble propulsif incluant un turboréacteur et un inverseur de poussée selon l'un quelconque des modes de réalisation précédents.

Le turboréacteur est de préférence un turboréacteur à flux mélangés; toutefois il peut également s'agir de tout autre type de turboréacteur.

Le présent exposé concerne également un aéronef comprenant un ensemble propulsif selon l'un quelconque des modes de réalisation précédents.

Le jeu peut avoir une valeur comprise entre 5 mm et 25 mm, de préférence entre 10 mm et 20 mm.

### Brève description des dessins

Les dessins annexés sont schématiques et visent avant tout à illustrer les principes de l'exposé.

Sur ces dessins, d'une figure à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.
[Fig. 1] La figure 1 est une vue latérale d'un exemple d'aéronef.
[Fig. 2] La figure 2 est une vue en coupe axiale d'un exemple de turboréacteur à flux mélangés.
[Fig. 3] La figure 3 représente une vue latérale d'un exemple d'inverseur de poussée, où la nacelle est partiellement représentée.
[Fig. 4] La figure 4 représente une vue en perspective de cet inverseur de poussée.
[Fig. 5] La figure 5 est une vue en coupe selon un plan axial de cet inverseur de poussée.
[Fig. 6] La figure 6 est une vue en perspective de l'inverseur de poussée comprenant les capots externes et prenant appui sur un mât réacteur.
[Fig. 7] La figure 7 représente un agrandissement de la zone VII de la figure 6.
[Fig. 8] La figure 8 est un schéma représentant un premier exemple de butée.
[Fig. 9] La figure 9 est un schéma représentant un deuxième exemple de butée.
[Fig. 10] La figure 10 représente une variante de réalisation de l'inverseur de poussée de la figure 3.

### Description des modes de réalisation

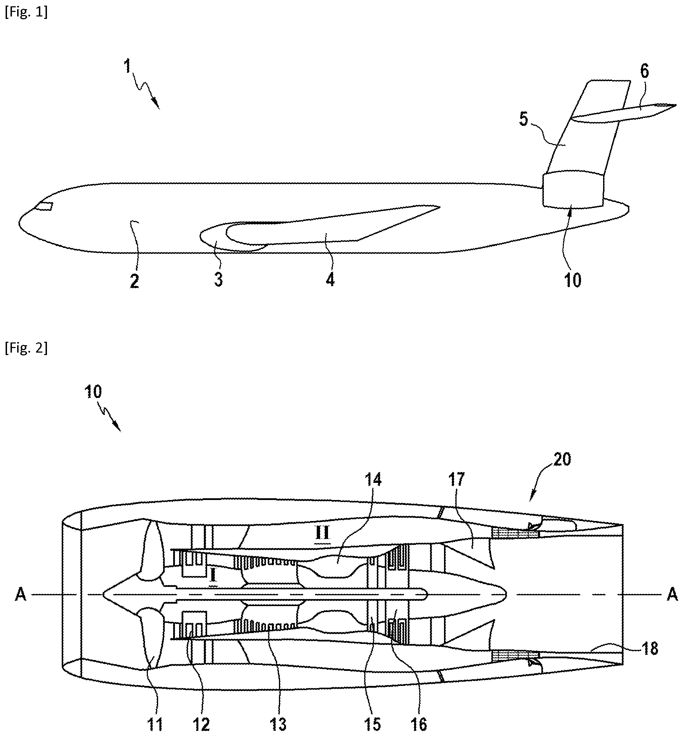

La figure 1 est une vue latérale schématique d'un exemple d'aéronef 1, comprenant un fuselage 2 d'où s'étendent latéralement depuis l'emplanture 3 des voilures 4. L'aéronef 1 présente un empennage à l'arrière, comprenant une dérive 5 sur laquelle sont fixées deux gouvernes 6. Un turboréacteur 10 est monté de chaque côté du fuselage 2, à l'arrière de celui-ci, par l'intermédiaire d'un mât réacteur.

L'exemple d'aéronef 1 de la figure 1 est uniquement illustratif, et toute autre disposition des éléments de structures est possible selon les connaissances générales de l'homme du métier. En particulier, les turboréacteurs 10 ne sont pas limités à deux, et peuvent être disposés sous la voilure 4 plutôt qu'à l'arrière du fuselage 2.

La figure 2 présente un exemple de turboréacteur 10 à flux mélangés ayant un axe principal A représenté en trait mixte. L'écoulement de l'air dans le turboréacteur 10 est représenté sur le schéma de la gauche vers la droite. L'entrée du turboréacteur 10 présente une soufflante 11 entraînant l'air à l'intérieur du turboréacteur 10. Le flux d'air est ensuite divisé en un flux d'air primaire I et un flux d'air secondaire II. Le flux d'air primaire I est comprimé successivement par un compresseur basse pression 12 et un compresseur haute pression 13, entraînés respectivement par une turbine basse pression 16 et une turbine haute pression 15. Entre les compresseurs 12, 13 et les turbines 15, 16 se trouve une chambre de combustion 14 recevant l'air comprimé par les compresseurs 12, 13 et dans laquelle est injecté le carburant afin de procéder à la combustion. Les gaz de combustion sortent de la chambre de combustion 14 en entraînant les turbines 15 et 16 et rejoignent en sortie le flux d'air secondaire II, ce dernier parcourant le turboréacteur 10 en périphérie radiale du flux d'air primaire I. Un mélangeur 17 est positionné en sortie des turbines 15, 16 afin de favoriser le mélange des deux flux de gaz I, II et optimiser ainsi la poussée totale des gaz sortant par la tuyère 18, à l'extrémité arrière du turboréacteur 10.

L'exemple de turboréacteur 10 de la figure 2 est illustratif et le turboréacteur 10 ne se limite pas à ce mode de réalisation.

Une partie arrière du turboréacteur 10 présente un inverseur de poussée 20, situé sur une circonférence du turboréacteur 10.

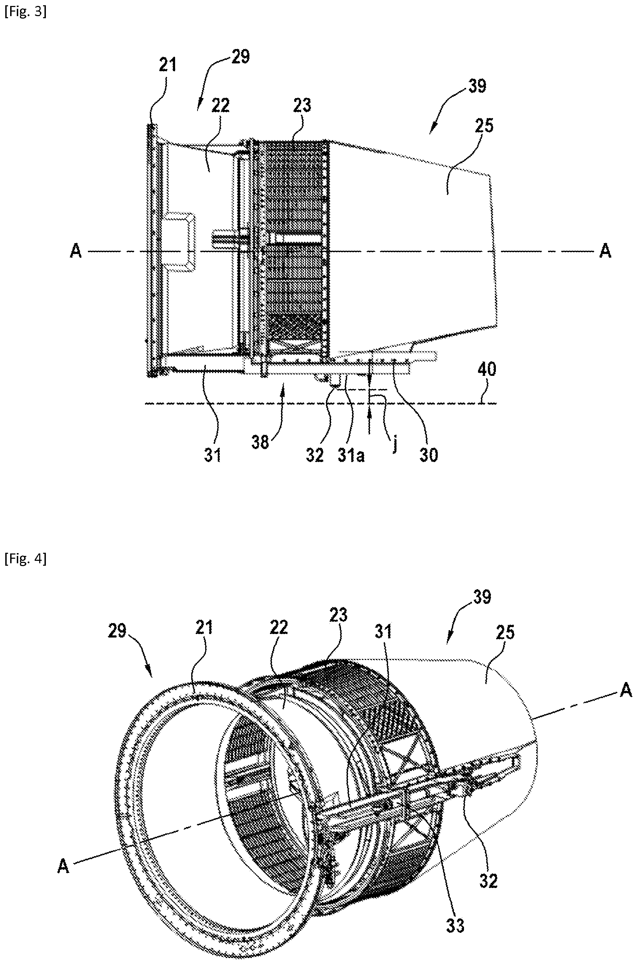

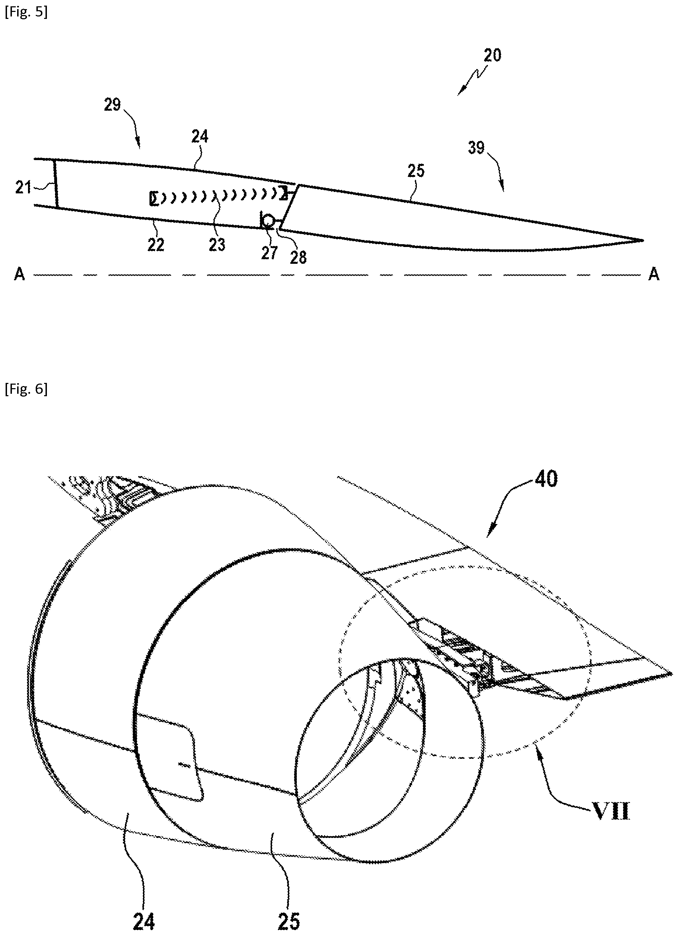

Les figures 3 et 4 représentent respectivement des vues latérale et en perspective de cet inverseur de poussée 20, dans lequel un capot 24 n'a pas été représenté afin de dévoiler la structure interne de l'inverseur de poussée 20 ; ce capot 24 sera présenté en référence à la figure 5.

L'inverseur de poussée 20 comprend une partie fixe 29, comprenant les pièces fixes dans le référentiel du moteur, et une partie mobile 39, en translation par rapport à la partie fixe 29.

La partie fixe 29 comprend une bride de fixation 21, permettant de fixer l'inverseur de poussée 20 sur un carter du turboréacteur 10, un carter fixe 22, entourant une veine du moteur, et un capot fixe 24 (visible sur la figure 5) entourant le carter fixe 22.

La partie mobile 39 est coaxiale à la partie fixe 29 et comprend au moins une grille d'inverseur 23, s'étendant sur un contour circonférentiel du turboréacteur 10, et un capot mobile 25. Le capot mobile 25, prévu en aval des grilles 23, est configuré pour être rapporté de manière étanche contre la partie fixe 29 dans l'état fermé. Dans l'état fermé, la grille 23 est située entre le carter 22 et le capot fixe 24. La partie mobile comprend en outre au moins un panneau de blocage formant un obstacle au flux sortant du moteur afin de dévier le flux d'air à travers les grilles 23 lors du fonctionnement de l'inverseur 20, c'est-à-dire en l'état déployé.

L'inverseur de poussée comprend un dispositif d'actionnement 38, comprenant une poutre 31, une glissière 30 et un dispositif d'entraînement 33. La poutre 31 est solidaire de la partie fixe 29 et s'étend axialement le long de la surface externe de la partie fixe 29 ; la glissière 30 est solidaire de la partie mobile 39 et montée en translation sur la poutre 31 ; le dispositif d'entraînement 33 permet d'entraîner la partie mobile 39 en translation par rapport à la partie fixe 29, par exemple en étant monté entre la poutre 31 et la glissière 30.

Le dispositif d'entraînement 33 prend la forme d'un unique vérin 33. L'action de ce vérin 33 est décrite en référence à la figure 5.

La figure 5 est une coupe selon un plan axial de l'inverseur de poussée 20. En particulier, la figure 5 représente les capots 24, 25 et les grilles 23.

Hors du fonctionnement de l'inverseur de poussée 20, le capot mobile 25 est rapporté de façon étanche contre la partie fixe 29, empêchant ainsi le passage de l'air par les grilles 23. Le carter fixe 22 porte ainsi à son extrémité aval un joint annulaire 27 contre lequel s'applique une bordure 28 de la partie mobile 39.

La partie mobile 39 est montée en translation axiale par rapport à la partie fixe 29 et l'action du dispositif d'entraînement 33 permet à l'inverseur de poussée 20 d'entrer dans un état déployé dans lequel le capot mobile 25 et les grilles 23 sont dégagées du capot fixe 24 de sorte qu'un passage d'air est laissé entre la partie fixe 29 et la partie mobile 39. Ce passage d'air traverse les grilles 23, dont l'orientation permet de rediriger vers l'amont le flux d'air, et ainsi ralentir l'aéronef 1.

Lors du fonctionnement de l'inverseur de poussée 20, l'éjection des gaz vers l'avant entraîne une poussée vers l'arrière sur l'inverseur de poussée 20, qui est transmise au turboréacteur 10 par le dispositif d'entraînement 33 afin de ralentir l'aéronef 1. Du fait du déséquilibre de la structure de l'inverseur de poussée 20 causé par la présence d'un unique dispositif d'actionnement 38, un moment de flexion est généré et entraîne une flexion de l'inverseur de poussée 20 dans une direction radiale selon un axe passant par le dispositif d'entraînement 33.

Autrement dit, le dispositif d'actionnement 38 est déplacé radialement vers l'extérieur, et l'inverseur de poussée 20 est déplacé en conséquence. Le niveau de déplacement est d'autant plus élevé que le point considéré est situé en aval. Cela peut entraîner des niveaux de déplacements de l'ordre de la dizaine de mm, voire de l'ordre d'une centaine de mm en des points de l'extrémité arrière de l'inverseur 20.

Cette déformation en flexion présente le risque d'empêcher la translation de la partie mobile 39 contre la partie fixe 29, et nécessite d'augmenter les jeux fonctionnels entre la partie mobile 39 et la partie fixe 29.

Afin de limiter la déformation, une butée 32 sous la forme d'une excroissance est prévue sur une surface radialement externe 31a de la poutre 31. Cette butée 32 est située en regard du mât réacteur 40.

La butée 32 est prévue pour présenter un jeu j par rapport au mât réacteur 40, de sorte que la butée 32 prend appui sur le mât à partir d'un niveau de flexion donné du dispositif d'actionnement 38.

Pour réaliser ce couplage, le jeu j entre la butée 32 et le mât réacteur 40 peut être choisi pour avoir une valeur comprise entre 5 mm et 25 mm, de préférence entre 10 mm et 20 mm afin de limiter les contacts aux cas de fonctionnement d'urgence. Dans le présent exemple, le jeu j est de 16 mm.

En particulier, afin de favoriser la reprise d'effort par le mât réacteur 40, la butée 32 est située sur une partie distale de la poutre 31, à une distance de l'extrémité arrière de la poutre 31 comprise entre 2,3 et 3,1 fois la longueur de la course de déplacement de la partie mobile entre la position fermée et la position déployée, et de préférence comprise entre 2,5 et 2,8 fois la course de déplacement de la partie mobile. Dans le présent exemple, la butée est située à une distance de l'extrémité arrière de la poutre 31 correspondant à 2,65 fois la course de la partie mobile.

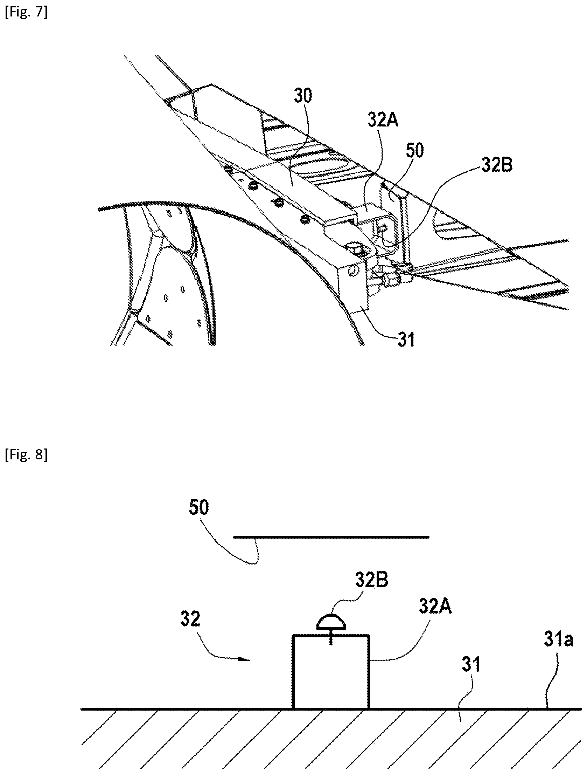

Comme cela est visible sur la figure 7, correspondant à la zone VII de la figure 6, la butée 32 est constituée d'une console 32A et d'un élément de contact 32B. La console 32A est un élément structurel par lequel la butée 32 est solidaire de la poutre 31, tandis que l'élément de contact 32B permet de répartir le contact sur la surface antagoniste du mât 40, de réduire la transmission de vibrations entre le turboréacteur 10 et le mât 40, et limiter les effets de martelage contre le mât 40, par exemple en cas de vibrations à forte amplitude de la poutre.

Par exemple, l'élément de contact 32B peut prendre la forme d'un tampon conçu dans un matériau élastomère ou en d'autres matériaux polymères comme le nylon, l'ertacetal ou le teflon. De plus, afin de limiter l'endommagement du mât réacteur 40, l'élément de contact 32B peut être une pièce d'usure conçue pour être remplacée, par exemple en étant amovible et réalisée dans un matériau de faible dureté relativement au matériau de la surface d'appui 50 du mât réacteur 40, afin d'user préférentiellement l'élément de contact 32B remplaçable.

Le remplacement de l'élément de contact 32B peut être défini selon un critère de durée de vol, nombre de vols, nombre de cycles d'utilisation de l'inverseur de poussée 20, niveau d'usure, ou bien après une utilisation en fonctionnement critique de l'inverseur de poussée 20 ou tout autre critère jugé pertinent par l'homme du métier.

Le mât réacteur 40 présente une surface antagoniste à la butée 32, prévue pour constituer une surface d'appui 50 de la butée 32. En particulier, cette surface d'appui 50 peut localement présenter une structure ou un matériau adapté pour recevoir la butée 32.

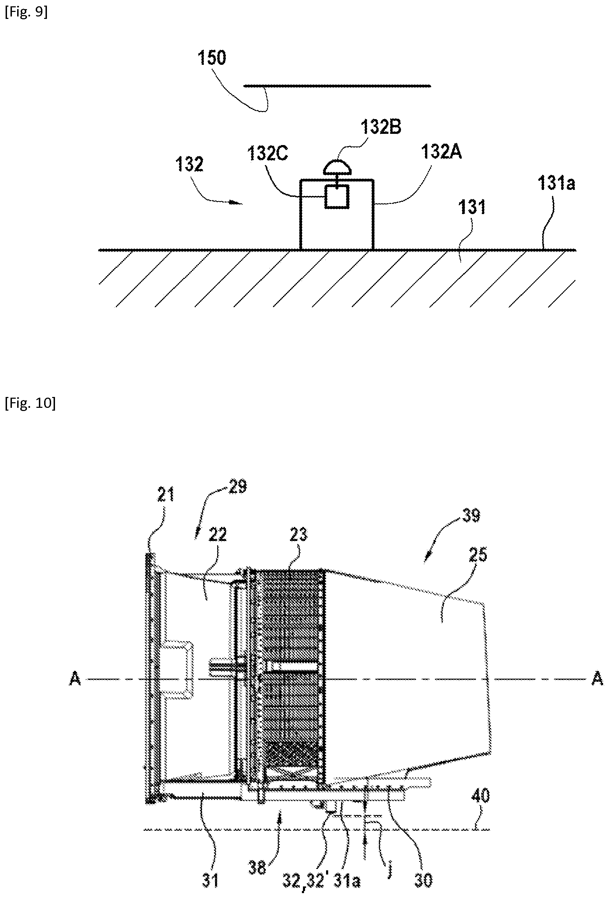

Selon une première variante représentée sur la figure 9, afin d'ajuster le jeu entre la butée 132 et la surface d'appui 150 du mât, par exemple lorsque l'élément de contact 132B présente une usure ne nécessitant pas de remplacement, la butée 132 présente un dispositif de réglage de la profondeur 132C, c'est-à-dire un dispositif permettant d'ajuster l'extension radiale de la butée 132 sans désassembler la butée 132.

La figure 10 présente un inverseur de poussée présentant une première butée 32 et une deuxième butée 32' permettant de fournir un deuxième chemin d'effort de l'inverseur vers le mât réacteur 40. Cette deuxième butée 32' est située dans un même plan radial que la première butée 32, et présente un même jeu j que la première butée 32, afin d'être utilisée en complément de la première butée 32 pour que les deux butées 32, 32' touchent le mât réacteur 40 à un même niveau de déformation de la poutre 31, en reprenant ainsi un effort de flexion ainsi qu'un moment de torsion.

La deuxième butée 32' peut présenter la même structure que la première butée 32, et également comprendre une console et un élément de contact amené à être remplacé, ainsi qu'un dispositif de réglage de la profondeur.

La deuxième butée 32' n'est pas limitée à ce mode de réalisation. En particulier, elle peut être positionnée en un point plus en avant ou en arrière que la première butée 32, présenter un jeu différent du premier jeu j ou encore toucher le mât réacteur 40 à partir d'un niveau de déformation supérieur au niveau de déformation donné.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Ensemble propulsif comprenant un mât réacteur (40), un turboréacteur (10) monté sur le mât réacteur (40) et possédant un axe principal (A), et un inverseur de poussée (20, 120, 220), l'inverseur de poussée (20, 120, 220) comprenant
une partie fixe (29), prévue pour être montée sur le turboréacteur (10) de manière à encercler ce dernier,
une partie mobile (39), coaxiale et montée en translation par rapport à la partie fixe (29) entre un état fermé et un état déployé, la partie mobile (39) étant rapportée de manière étanche contre la partie fixe (29) en bloquant un passage de sortie d'air dans l'état fermé, alors que le passage de sortie d'air est libéré dans l'état déployé, et
un unique dispositif d'actionnement (38) comportant
- une poutre (31), solidaire de la partie fixe (29), s'étendant axialement le long de la surface externe de la partie fixe (29),
- une glissière (30), solidaire de la partie mobile (39), montée en translation sur la poutre (31), et
- un dispositif d'entraînement (33), configuré pour entraîner la partie mobile (39) en translation par rapport à la partie fixe (29),
**caractérisé en ce que** la poutre (31) ou la glissière (30) comprend une butée (32) prenant la forme d'une excroissance faisant saillie sur une surface radialement externe (31a) de ladite poutre (31) ou glissière (30) et configurée pour présenter un jeu (j) dans l'état fermé par rapport audit mât réacteur (40).

2. Ensemble propulsif selon la revendication 1, dans lequel l'inverseur de poussée (20) comprend un unique dispositif d'entraînement (33).

3. Ensemble propulsif selon la revendication 1 ou 2, dans laquelle le dispositif d'entraînement (33) est monté entre la poutre (31) et la glissière (30).

4. Ensemble propulsif selon l'une quelconque des revendications 1 à 3, dans lequel au moins une butée (32) est portée par la poutre (31).

5. Ensemble propulsif selon la revendication 4, dans lequel la butée (32) est située à une distance de l'extrémité avant de la poutre (31) comprise entre 2,3 et 3,1 fois la longueur de la course de la partie mobile entre la position fermée et la position déployée (39), de préférence comprise entre 2,5 et 2,8 fois la longueur de la course de la partie mobile (39).

6. Ensemble propulsif selon l'une quelconque des revendications 1 à 5, dans lequel la butée (32) est configurée pour toucher le mât réacteur (40) à partir d'un niveau de flexion donné de la poutre (31) correspondant à un fonctionnement d'urgence de l'inverseur de poussée (20).

7. Ensemble propulsif selon l'une quelconque des revendications 1 à 6, dans lequel la poutre (31) ou la glissière (30) présente une deuxième butée (32') positionnée dans un même plan radial que la première butée (32) et configurée pour présenter un jeu par rapport au mât réacteur (40) sensiblement égal au jeu (j) de la première butée (32).

8. Ensemble propulsif selon l'une quelconque des revendications 1 à 7, dans lequel au moins une butée (32) comprend un élément de contact (32B).

9. Ensemble propulsif selon l'une quelconque des revendications 1 à 8, dans lequel au moins une butée (132) comporte un dispositif de réglage de la profondeur (132C).

10. Ensemble propulsif selon l'une quelconque des revendications 1 à 9, dans lequel au moins une butée (32) comprend une console (32A) et un élément de contact (32B) prévu pour être remplacé.

11. Ensemble propulsif selon la revendication 10, dans laquelle l'élément de contact (32B) est amovible et destiné à être remplacé en cas d'usure.

12. Aéronef comprenant un ensemble propulsif selon l'une quelconque des revendications 1 à 11.

## Patentansprüche

1. Antriebsanordnung, die einen Triebwerkgondelstiel (40), ein Turbostrahltriebwerk (10), das an dem Triebwerkgondelstiel (40) montiert ist und eine Hauptachse (A) besitzt, und eine Schubumkehrvorrichtung (20, 120, 220) umfasst, wobei die Schubumkehrvorrichtung (20, 120, 220) umfasst:
einen festen Teil (29), der dazu vorgesehen ist, derart an dem Turbostrahltriebwerk (10) montiert zu werden, dass er dieses letztere umgibt,
einen beweglichen Teil (39), der koaxial und translatorisch in Bezug auf den festen Teil (29) zwischen einem geschlossenen Zustand und einem ausgefahrenen Zustand montiert ist, wobei der bewegliche Teil (39) auf dichte Weise gegen den festen Teil (29) angestückt ist und dabei im geschlossenen Zustand einen Luftaustrittsdurchgang versperrt, während der Luftaustrittsdurchgang im ausgefahrenen Zustand frei ist, und
eine einzige Betätigungsvorrichtung (38), die beinhaltet:
- einen Träger (31), der fest mit dem festen Teil (29) verbunden ist und sich axial entlang der äußeren Oberfläche des festen Teils (29) erstreckt,
- eine Gleitbahn (30), die fest mit dem beweglichen Teil (39) verbunden ist und translatorisch an dem Träger (31) montiert ist, und
- eine Mitnahmevorrichtung (33), die dazu ausgestaltet ist, den beweglichen Teil (39) in Bezug auf den festen Teil (29) translatorisch mitzunehmen,
**dadurch gekennzeichnet, dass** der Träger (31) oder die Gleitbahn (30) einen Anschlag (32) umfasst, der die Form eines Vorsprungs annimmt, der auf einer radial äußeren Oberfläche (31a) des Trägers (31) oder der Gleitbahn (30) hervorsteht und dazu ausgestaltet ist, im geschlossenen Zustand ein Spiel (j) in Bezug auf den Triebwerkgondelstiel (40) aufzuweisen.

2. Antriebsanordnung nach Anspruch 1, wobei die Schubumkehrvorrichtung (20) eine einzige Mitnahmevorrichtung (33) umfasst.

3. Antriebsanordnung nach Anspruch 1 oder 2, wobei die Mitnahmevorrichtung (33) zwischen dem Träger (31) und der Gleitbahn (30) montiert ist.

4. Antriebsanordnung nach einem der Ansprüche 1 bis 3, wobei der mindestens eine Anschlag (32) von dem Träger (31) getragen wird.

5. Antriebsanordnung nach Anspruch 4, wobei der Anschlag (32) sich in einem Abstand von dem vorderen Ende des Trägers (31) befindet, der zwischen dem 2,3- und 3,1-Fachen der Länge des Wegs des beweglichen Teils zwischen der geschlossenen Position und der ausgefahrenen Position (39) beträgt und vorzugsweise zwischen dem 2,5- und 2,8-Fachen der Länge des Wegs des beweglichen Teils (39) beträgt.

6. Antriebsanordnung nach einem der Ansprüche 1 bis 5, wobei der Anschlag (32) dazu ausgestaltet ist, den Triebwerkgondelstiel (40) ab einem gegebenen Biegungsgrad des Trägers (31) zu berühren, der einem Notbetrieb der Schubumkehrvorrichtung (20) entspricht.

7. Antriebsanordnung nach einem der Ansprüche 1 bis 6, wobei der Träger (31) oder die Gleitbahn (30) einen zweiten Anschlag (32') aufweist, der in einer gleichen radialen Ebene wie der erste Anschlag (32) positioniert ist und dazu ausgestaltet ist, ein Spiel in Bezug auf den Triebwerkgondelstiel (40) aufzuweisen, das im Wesentlichen gleich dem Spiel (j) des ersten Anschlags (32) ist.

8. Antriebsanordnung nach einem der Ansprüche 1 bis 7, wobei der mindestens eine Anschlag (32) ein Kontaktelement (32B) umfasst.

9. Antriebsanordnung nach einem der Ansprüche 1 bis 8, wobei der mindestens eine Anschlag (132) eine Tiefenregelungsvorrichtung (132C) beinhaltet.

10. Antriebsanordnung nach einem der Ansprüche 1 bis 9, wobei der mindestens eine Anschlag (32) einen Ausleger (32A) und ein Kontaktelement (32B) umfasst, das dazu vorgesehen ist, ausgetauscht zu werden.

11. Antriebsanordnung nach Anspruch 10, wobei das Kontaktelement (32B) abnehmbar ist und dazu bestimmt ist, im Fall von Verschleiß ausgetauscht zu werden.

12. Luftfahrzeug, das eine Antriebsanordnung nach einem der Ansprüche 1 bis 11 umfasst.

## Claims

1. A propulsion assembly comprising an engine nacelle pylon (40), a turbojet engine (10) mounted on the engine nacelle pylon (40) and having a center-line (A), and a thrust reverser (20, 120, 220), the thrust reverser (20, 120, 220) comprising
a fixed part (29), designed to be mounted on the turbojet engine (10) so as to encircle the latter,
a movable part (39), coaxial and mounted in translation with respect to the fixed part (29) between a closed state and an extended state, the movable part (39) being sealingly inserted against the fixed part (29) by blocking an air outlet passage in the closed state, whereas the air outlet passage is freed up in the extended state, and
a single actuating device (38) including
- a beam (31), secured to the fixed part (29), extending axially along the outer surface of the fixed part (29),
- a slider (30), secured to the movable part (39), mounted in translation on the beam (31), and
- a driving device (33), configured to drive the movable part (39) in translation with respect to the fixed part (29),
**characterized in that** the beam (31) or the slider (30) comprises a stop (32) taking the form of a protuberance protruding on a radially outer surface (31a) of said beam (31) or slider (30) and configured to have a clearance (j) in the closed state with respect to said engine nacelle pylon (40).

2. Propulsion assembly as claimed in claim 1, wherein the thrust reverser (20) comprises a single driving device (33).

3. Propulsion assembly as claimed in claim 1 or 2, wherein the driving device (33) is mounted between the beam (31) and the slider (30).

4. Propulsion assembly as claimed in any of claims 1 to 3, wherein at least one stop (32) is carried by the beam (31).

5. Propulsion assembly as claimed in claim 4, wherein the stop (32) is located at a distance from the front end of the beam (31) between 2.3 and 3.1 times the length of the track of the movement of the movable part between the closed position and the extended position (39), preferably between 2.5 and 2.8 times the length of the track of the movement of the movable part (39).

6. Propulsion assembly as claimed in any of claims 1 to 5, wherein the stop (32) is configured to touch the engine nacelle pylon (40) beyond a given level of bending of the beam (31) corresponding to a deformation of the beam under the effect of an emergency operation of the thrust reverser (20).

7. Propulsion assembly as claimed in any of claims 1 to 6, wherein the beam (31) or the slider (30) has a second stop (32') positioned in a common radial plane with the first stop (32) and configured to have a clearance with respect to the engine nacelle pylon (40) substantially equal to the clearance (j) of the first stop (32).

8. Propulsion assembly as claimed in any of claims 1 to 7, wherein at least one stop (32) comprises a contact element (32B).

9. Propulsion assembly as claimed in any of claims 1 to 8, wherein at least one stop (132) includes a depth-adjusting device (132C).

10. Propulsion assembly as claimed in any of claims 1 to 9, wherein at least one stop (32) comprises a bracket (32A) and a contact element (32B) designed to be replaced.

11. Propulsion assembly as claimed in claim 10, wherein the contact element (32B) is removable and intended to be replaced in the event of wear.

12. An aircraft comprising a propulsion assembly as claimed in any of claims 1 to 11.
